# EUROPEAN PATENT APPLICATION

(11) **EP 2 889 824 A1**
(43) Date of publication of application: **01.07.2015**
(21) Application number: 12883355.5
(22) Date of filing: 21.08.2012
(51) Int. Cl.: G06Q 20/40, G06Q 20/24, G06Q 20/32

(54) **CREDIT CARD TRANSACTION METHOD USING SMARTPHONE THAT DOES NOT USE CREDIT CARD SALES SLIP**

(71) Applicant: Korea Creadic Life Co., Ltd., Seoul 150-041 (KR)
(72) Inventor: KANG, Tae Jung, Seoul 135-240 (KR)
(74) Representative: Cabinet Chaillot
(86) International application number: PCT/KR2012/006633
(87) International publication number: WO 2014/030777

(57) **Abstract**

The present invention relates to a credit card transaction method using a smartphone without using a credit card sales slip, and the method comprises an authorization request step, a preliminary authorization transmitting step, a signing step, a signature transmitting step, a signature comparing step, and a slip transmitting step. More particularly, the present invention relates to a credit card transaction method in which credit card authorization information is transmitted to the smartphone of a user when the user uses a credit card, signature data is transmitted to a credit card company to obtain normal authorization when the user inputs a signature to the smartphone to which the authorization has been transmitted, and a slip is transmitted to the smartphone from the store in which the payment is being performed by the credit card, thus performing a normal credit card transaction without a paper credit card sales slip.

## Description

### [Technical Field]

The present invention relates to a credit card transaction method using a smartphone without using a credit card sales slip. More particularly, the present invention relates to a credit card transaction method in which credit card authorization information is transmitted to a smartphone of a user when the user uses a credit card, signature data is transmitted to a credit card company server to obtain normal authorization when the user inputs a signature to the smartphone to which the authorization has been transmitted, and a digital sales slip is transmitted to the smartphone, thus performing a normal credit card transaction with no paper credit card sales slip.

In addition, the present invention relates to an electronic signature device including an advertisement function. More specifically, the present invention relates to an electronic signature device including an advertisement function, wherein the electronic signature device adopted in a card terminal or a point of sale (POS) system (hereinafter referred to as a franchised store payment system), which is a payment means used in a general store or the like, is configured in a larger size so as to deliver an advertisement received in the franchised store payment system.

### [Background Art]

In general, a credit card payment scheme is a payment scheme in which a card holder purchases goods or service using credit guarantee of a credit card company in a franchised store recruited by the credit card company and then pays money for the purchase to the credit card company on a payment date and the franchised store receives the money paid for the goods or service sold to the card holder by the credit card company.

When a user causes a credit card terminal to recognize his/her credit card in this credit card payment scheme, the credit card terminal requests a credit card company server to provide authorization and the credit card company server immediately transmits authorization information to the credit card terminal along with an authorization result.

Thereafter, the credit card terminal outputs a sales slip according to the authorization result, the output sales slip is provided to the user, and the user is requested to sign the slip.

When the user signs the sales slip as described above, one copy of the sales slip is transmitted to the credit card company and a signature comparing procedure is performed.

In addition, because the use of credit cards has recently increased rapidly, credit card terminals, POS systems, and the like are representatively used frequently as payment means for credit cards.

The aforementioned POS system enables various data related to distribution to be easily managed and provides convenience at the time of sales business processing. The POS system is used in various places such as convenience stores and retail stores as well as large stores such as department stores and discount stores.

The above-described card terminal serving as a simple device in which payment and cancelation are enabled by recognizing the credit card is connected to a network.

An electronic signature device is attached to the above-described franchised store payment system and the electronic signature device is configured to electronically receive a signature of a credit card user.

Conventional technology for the electronic signature device is disclosed in Korean Patent Application Publication Nos. 2008-91623 and 2007-104872 and the like.

### [Disclosure]

### [Technical Problem]

However, the conventional credit card transaction method in which payment is made using a sales slip has the following problems.
(1) The credit card company can only identify the availability and transaction limit of a credit card and does not identify whether a credit card user currently requesting payment authorization is authentic.
(2) Because the sales slip is made of paper, resources are wasted and environmental contamination is caused.
(3) Because it is necessary for the user to keep and manage the sales slip and it is difficult to generate digital data from the sales slip, it is difficult to manage details of use.

In addition, the conventional electronic signature device has the following problems.
(1) Because the sales slip is only used in a signature function after card payment, utilization is degraded.
(2) Because a signature window of the sales slip is narrow, it is inconvenient to sign the sales slip.
(3) Because it is difficult to know an exposure frequency even when the advertisement is displayed in the franchised store payment system, it is difficult to recruit advertisers.

### [Technical Solution]

In order to solve the problem of a conventional credit card transaction method by a sales slip, the present invention is a method in which a user uses a credit card in a system in which a credit card company stores signature information and smartphone information of the user in a credit card company server in advance when the credit card company issues a credit card and a credit card terminal includes a slip storage function, the method including: an authorization request step of requesting, by the credit card terminal, authorization by transmitting sales details and credit card information to the credit card company server; a preliminary authorization transmitting step of transmitting, by the credit card company server, preliminary authorization information including payment details to the smartphone of the credit card user after the authorization request step; a signing step of displaying, by a payment application program preset in the smartphone of the user, a preliminary authorization window including the preliminary authorization information transmitted in the preliminary authorization transmitting step and prompting the user to input a signature in a signature window formed in the preliminary authorization window; a signature transmitting step of transmitting, by the smartphone of the user, the preliminary authorization window in which the signature is input in the signing step to the credit card company server; a signature comparing step of determining, by the credit card company server, the authorization by comparing the input signature of the preliminary authorization window transmitted in the signature transmitting step to signature information of a registered user; and a slip transmitting step of transmitting an authorization acknowledgement to the credit card terminal along with authorization information when the authorization is determined in the signature comparing step and transmitting a payment authorization window to the smartphone of the user.

According to another example of the present invention, there is provided a credit card transaction method using a smartphone without using a credit card sales slip when a user uses a credit card in a system in which a credit card company stores signature information and smartphone information of the user in a credit card company server (200) in advance when the credit card company issues a credit card to the user and a credit card terminal (100) includes a slip storage function, the credit card transaction method including: a general authorization request step (10) of requesting, by a credit card terminal (100), authorization by transmitting sales details and credit card information to the credit card company server (200); a preliminary authorization transmitting step (20) of transmitting, by the credit card company server (200), preliminary authorization information including payment details to the smartphone (300) of the credit card user after the authorization request step (10); a signing step (30) of displaying, by a payment application program preset in the smartphone (300) of the user, a preliminary authorization window (310) including the preliminary authorization information transmitted in the preliminary authorization transmitting step (20) and prompting the user to input a signature in a signature window (312) formed in the preliminary authorization window (310); a signature transmitting step (40) of transmitting, by the smartphone (300) of the user, the preliminary authorization window (310) in which the signature is input in the signing step (30) to the credit card company server (200); a general signature comparing step (50) of comparing, by the credit card company server (200), the input signature of the preliminary authorization window (310) transmitted in the signature transmitting step (40) to signature information of a registered user, converting a signature matching degree into a numerical value, determining the authorization when the numerical value is greater than or equal to 80%, and determining authorization rejection when the signatures do not match; and a slip transmitting step (60) of transmitting, by the credit card company server (200), an authorization acknowledgement to the credit card terminal (100) along with authorization information when the authorization is determined in the signature comparing step (50) and transmitting a payment authorization window (320) to the smartphone (300) of the user without outputting the sales slip.

According to still another embodiment of the present invention, a credit card transaction method using a smartphone includes; a step (1) of storing signature information and smartphone information of a user in a credit card company server (200); an authorization request step (10) of requesting, by a credit card terminal (100) including a slip storage function, authorization by transmitting sales details and credit card information to the credit card company server (200); a preliminary authorization transmitting step (20) of transmitting, by the credit card company server (200), preliminary authorization information including payment details to the smartphone (300) of the credit card user after the authorization request step (10); a signing step (30) of displaying, by a payment application program preset in the smartphone (300) of the user, a preliminary authorization window (310) including the preliminary authorization information transmitted in the preliminary authorization transmitting step (20) and prompting the user to input a signature in a signature window (312) formed in the preliminary authorization window (310); a signature transmitting step (40) of transmitting, by the smartphone (300) of the user, the preliminary authorization window (310) in which the signature is input in the signing step to the credit card company server (200); a signature comparing step (50) of determining, by the credit card company server (200), the authorization by comparing the input signature of the preliminary authorization window (310) transmitted in the signature transmitting step (40) to signature information of a registered user; and a slip transmitting step (60) of transmitting an authorization acknowledgement to the credit card terminal (100) along with authorization information when the authorization is determined in the signature comparing step (50) and transmitting a payment authorization window (320) to the smartphone (300) of the user.

In addition, in the signing step (30), an advertisement may be displayed in the signature window (312).

In addition, in order to solve the problem of the conventional electronic signature device, according to an embodiment of the present invention, there is provided an electronic signature device connected to a franchised store payment system generally connected to a network, wherein the electronic signature device has a signature window formed in a touch pad, wherein a size of a signature window is a diagonal length of at least 7 inches, wherein a network adapter is configured in the electronic signature device, and wherein the electronic signature device displays an advertisement delivered from the franchised store payment system at a normal time and displays a payment standby screen serving as one half screen and an advertisement screen serving as the other half screen at a payment authorization time.

An advertisement method using the above-described electronic signature device in an advertiser server, a franchised store payment system, a value-added network (VAN) company server, and a credit card company server includes: an advertiser recruiting step of recruiting, by the VAN company server, an advertiser; a log-in step of prompting, by the VAN company server, the advertiser server recruited in the advertiser recruiting step to log in; a transmitting step of transmitting, by the VAN company server, an advertisement file received from the advertiser server to the franchised store payment system; a delivering step of delivering, by the franchised store payment system, the advertisement file to a signature window of the electronic signature device; an authorization step of transmitting authorization information from the franchised store payment system to the credit card company server when card payment is required in the franchised store payment system; an authorization transmitting step of transmitting, by the credit card company server, the authorization information to the franchised store payment system; a signing step of continuously delivering, by the franchised store payment system, the advertisement file to one half of the signature window while performing a signature input step using the other half of the signature window of the electronic signature device; a result transmitting step of storing, by the franchised store payment system, signature information after the signing step, calculating a result of delivering the advertisement file as an exposure frequency, and transmitting a calculation result to the VAN company server; and a payment request step of requesting, by the VAN company server, the advertiser server to make payment by receiving the exposure frequency.

In addition, according to still another embodiment of the present invention, an advertisement method using an electronic signature device in an advertiser server, a franchised store payment system, a VAN company server, and a credit card company server includes: an advertiser recruiting step of recruiting, by the VAN company server, an advertiser; a log-in step of prompting, by the VAN company server, the advertiser server recruited in the advertiser recruiting step to log in; a transmitting step of transmitting, by the VAN company server, an advertisement file received from the advertiser server to the franchised store payment system; a delivering step of delivering, by the franchised store payment system, the advertisement file to a signature window having a size of at least 7 inches in the electronic signature device; an authorization step of transmitting authorization information from the franchised store payment system to the credit card company server when card payment is required in the franchised store payment system; an authorization transmitting step of transmitting, by the credit card company server, the authorization information to the franchised store payment system; a signing step of continuously delivering, by the franchised store payment system, the advertisement file to one half of the signature window while performing a signature input step using the other half of the signature window of the electronic signature device; a result transmitting step of storing, by the franchised store payment system, signature information after the signing step, calculating the number of times of storing the signature information as an advertisement exposure frequency, and transmitting a result of delivering the advertisement file to the VAN company server; and a payment request step of requesting, by the VAN company server, the advertiser server to make payment by receiving the exposure frequency.

In addition, according to still another embodiment of the present invention, an advertisement method using a smartphone in an advertiser server, a credit card terminal, a smartphone, a VAN company server, and a credit card company server includes: an advertiser recruiting step of recruiting, by the VAN company server, an advertiser; a log-in step of prompting, by the VAN company server, the advertiser server recruited in the advertiser recruiting step to log in; a transmitting step of transmitting, by the VAN company server, an advertisement file received from the advertiser server to the smartphone; a delivering step of delivering the advertisement file to a signature window of the smartphone; an authorization step of transmitting authorization information from the credit card terminal to the credit card company server when card payment is required in the credit card terminal; an authorization transmitting step of transmitting, by the credit card company server, the authorization information to the credit card terminal; a signing step of continuously delivering, by the smartphone, the advertisement file to the signature window while performing a signature input step in the signature window; a result transmitting step of storing, by the credit card terminal, signature information after the signing step, calculating the number of times of storing the signature information as an advertisement exposure frequency, and transmitting a result of delivering the advertisement file to the VAN company server; and a payment request step of requesting, by the VAN company server, the advertiser server to make payment by receiving the exposure frequency.

### [Advantageous Effects]

A credit card transaction method using a smartphone without using a credit card sales slip according to the present invention has the following advantageous effects.
(1) Because signature information of a user registered by a credit card company server can be compared to a signature input in a preliminary authorization window and the user can be verified, it is possible to securely use a credit card.
(2) Because a sales slip made of paper is never used, resources are saved.
(3) Because payment information is stored in the smartphone of the user, it is possible to systematically manage a card use state.

An electronic signature device with an advertisement function according to the present invention has the following advantageous effects.
(1) Availability increases because an advertisement can be viewed even while a signature is input when card payment is authorized.
(2) An advertisement video delivery function is performed simultaneously when the signature is input. Because a sufficient width of a signature window can be secured, a wide signature space is provided.
(3) Because it is possible to know an advertisement exposure frequency in connection with the franchised store payment system, it is possible to easily recruit an advertiser and receive a fee from the advertiser by calculating the fee according to the exposure frequency.

### [Description of Drawings]

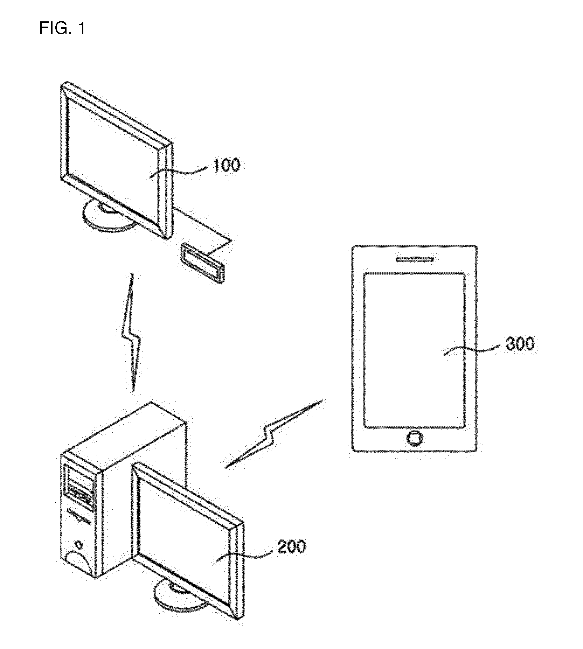

FIG. 1 is a network configuration diagram of a credit card transaction method using a smartphone without using a credit card sales slip according to a preferred embodiment of the present invention.

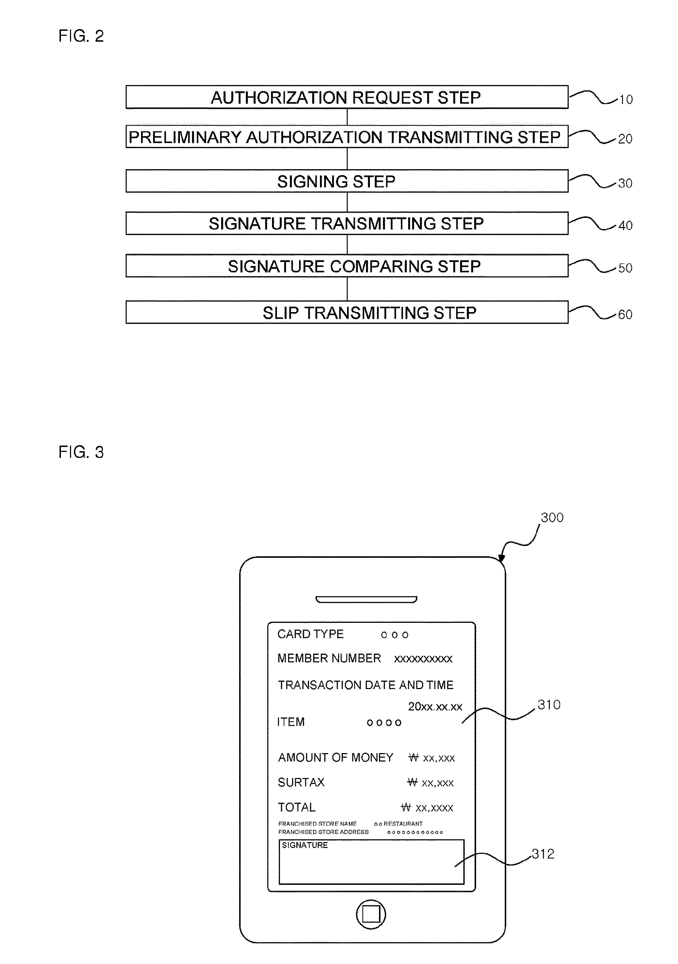

FIG. 2 is an operation flowchart of the credit card transaction method using the smartphone without using the credit card sales slip according to a preferred embodiment of the present invention.
FIG. 3 is a conceptual diagram of a preliminary authorization window of the smartphone of the credit card transaction method using the smartphone without using the credit card sales slip according to a preferred embodiment of the present invention.

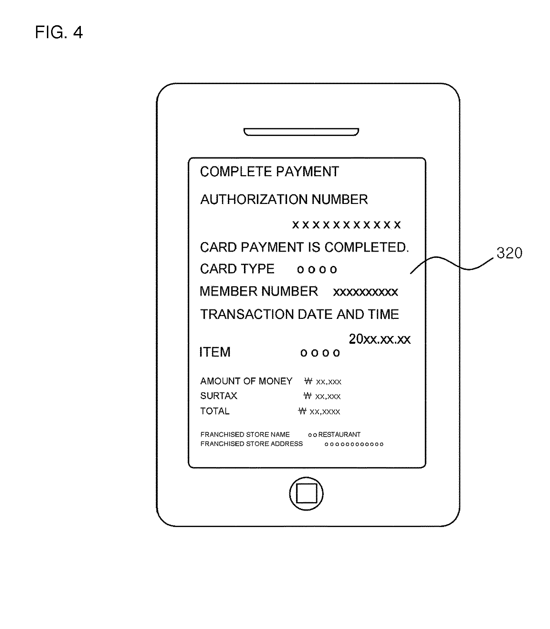

FIG. 4 is a conceptual diagram of a payment authorization window of the smartphone of the credit card transaction method using the smartphone without using the credit card sales slip according to a preferred embodiment of the present invention.
FIG. 5 is a conceptual diagram of an electronic signature device including an advertisement function according to a preferred embodiment of the present invention.
FIG. 6 is a conceptual diagram illustrating a screen configuration of a payment standby screen in a signature window at the time of payment authorization of the electronic signature device including the advertisement function according to a preferred embodiment of the present invention.
FIG. 7 is a conceptual diagram of a network configuration of an advertisement method using the electronic signature device including the advertisement function according to a preferred embodiment of the present invention.
FIG. 8 is a flowchart illustrating the advertisement method using the electronic signature device including the advertisement function according to a preferred embodiment of the present invention.
FIG. 9 is a conceptual diagram of a payment authorization window of a smartphone including an advertisement function according to a preferred embodiment of the present invention.
FIG. 10 is a conceptual diagram illustrating a network configuration of an advertisement method using the smartphone the payment authorization window including the advertisement function according to a preferred embodiment of the present invention.

### [Modes of the Invention]

The present invention is a method in which a user uses a credit card in a system in which a credit card company stores signature information and smartphone information of the user in a credit card company server 200 in advance when the credit card company issues a credit card to the user and a credit card terminal 100 includes a slip storage function, the method including: an authorization request step 10 of requesting, by a credit card terminal 100, authorization by transmitting sales details and credit card information to the credit card company server 200; a preliminary authorization transmitting step 20 of transmitting, by the credit card company server 200, preliminary authorization information including payment details to the smartphone 300 of the credit card user after the authorization request step 10; a signing step 30 of displaying, by a payment application program preset in the smartphone 300 of the user, a preliminary authorization window 310 including the preliminary authorization information transmitted in the preliminary authorization transmitting step 20 and prompting the user to input a signature in a signature window 312 formed in the preliminary authorization window 310; a signature transmitting step 40 of transmitting, by the smartphone 300 of the user, the preliminary authorization window 310 in which the signature is input in the signing step to the credit card company server 200; a signature comparing step 50 of determining, by the credit card company server 200, the authorization by comparing the input signature of the preliminary authorization window 310 transmitted in the signature transmitting step 40 to signature information of a registered user; and a slip transmitting step 60 of transmitting an authorization acknowledgement to the credit card terminal 100 along with authorization information when the authorization is determined in the signature comparing step 50 and transmitting a payment authorization window 320 to the smartphone 300 of the user.

The user registers his/her credit card according to each card company in a state in which an integrated payment application program provided by the card company is installed in his/her smartphone 300 in advance.

The payment application program is developed by the card companies in an integrated type and distributed in program application markets of the smartphone 300 for free. The application program is configured to be executable in a Wi-Fi or 3G environment in which a use fee necessary for communication is not charged.

The above-described credit card terminal 100 can use a sales slip made of paper and include a slip storage function of storing content of a sales slip.

The slip storage function is configured for storing a digital sales slip (graphic file) similar to a sale management file generally used in a POS system as a storage function.

The above-described credit card company server 200 serving as a server used by each card company is configured to interwork with the payment application program by establishing a connection to the smartphone 300 using the Internet.

The above-described authorization request step 10 is the step in which the credit card terminal 100 transmits payment details to the credit card company when the user makes payment through the credit card as in the conventional card authorization.

The above-described preliminary authorization transmitting step 20 is the step in which the credit card company server 200 transmits preliminary authorization information to the payment application program of the smartphone 300 and a notification function of the smartphone 300 is configured for notifying the user of information shown in the payment application program.

In the above-described preliminary authorization transmitting step 20, the preliminary authorization information transmitted to the smartphone 300 is shown in the preliminary authorization window 310 of the smartphone 300.

The user identifies information of the preliminary authorization window 310 and inputs a signature in the signature window 312 formed in a lower portion of the preliminary authorization window 310.

The signing step 30 and the signature transmitting step 40 are the steps in which the user inputs the signature and the smartphone 300 retransmits the preliminary authorization window 310 in which the signature is input in the signature window 312 to the credit card company server 200.

The above-described signature comparing step 50 is the step in which the credit card company server 200 compares user signature information registered in advance to a signature formed in the signature window 312 of the preliminary authorization window 310, and is configured to convert a matching degree of the signature used in recognition technology into a numerical value, determine the authorization when the numerical value is greater than or equal to 80%, and determine authorization rejection when the signatures do not match.

When the signatures match each other in the signature comparing step 50, the slip transmitting step 60 is performed. In the slip transmitting step, the authorization information is transmitted to the credit card terminal 100 and the payment authorization window 320 is transmitted to the smartphone 300 of the user.

When the signatures do not match each other in the signature comparing step 50, authorization rejection is transmitted to the credit card terminal 100 along with details.

Hereinafter, the description of an operation of the credit card transaction method using the smartphone without using the credit card sales slip according to a preferred embodiment of the present invention is as follows.

The user receiving the issued credit card provides information of his/her smartphone 300 and registers a signature in advance.

Thereafter, the credit card company server 200 installs the payment application program in the smartphone 300 or the user installs the payment application program in the smartphone 300.

In a preparation state as described above, the credit card terminal 100 transmits payment details and credit card information to the credit card company server 200 when the user uses the credit card.

The above-described credit card company server 200 creates payment information appropriate for the payment application program and transmits the created payment information to the smartphone 300.

The user identifies the preliminary authorization window 310 using the payment application program of the smartphone 300 and inputs the signature in the signature window 312.

The smartphone 300 transmits the preliminary authorization window 310 in which the signature is input to the credit card company server 200.

Thereafter, the credit card company server 200 determines whether the signature information registered by the user in advance matches the signature of the preliminary authorization window 310, transmits the authorization when the numerical value is greater than or equal to 80%, and transmits authorization rejection when the signatures do not match.

If the credit card company server 200 permits the authorization, a graphic file of a sales slip format is transmitted to the credit card terminal 100 and the payment authorization window 320 is transmitted to the smartphone 300.

When the above-described credit card company server 200 rejects the authorization, the authorization rejection is transmitted to the credit card terminal 100.

As described above, a printed sales slip is not used in the form of paper in the credit card terminal 100 in order to save resources, and the credit card company server 200 checks whether a signature corresponds to the registered signature information instead of determining authorization by means of only a telephone number, to thereby enable accurate user authentication and thus enable the secure use of a credit card.

In addition, information on the credit card usage of the user is recorded on his/her smartphone 300, thus enabling the user to manage his/her usage at the same time.

The present invention provides an electronic signature device 500 connected to a franchised store payment system 720 generally connected to a network, wherein the electronic signature device 500 has a signature window 610 formed in a touch pad, wherein a size of a signature window 610 has a diagonal length of at least 7 inches, wherein a network adapter is configured in the electronic signature device 500, and wherein the electronic signature device 500 displays an advertisement delivered from the franchised store payment system 720 at normal times and displays a payment standby screen 606 serving as one half screen and an advertisement screen 602 serving as the other half screen at the time of payment authorization.

The above-described franchised store payment system 720 is configured by another system such as a credit card terminal or a POS system and connected to the electronic signature device 500.

The above-described electronic signature device 500 may be connected to the franchised store payment system 720 or directly connected to a network through the network adapter.

The above-described signature window 610 is formed in a touch pad and configured to recognize a signature when a consumer inputs the signature.

The above-described signature window 610 is switched to the payment standby screen 606 when payment authorization is generated in the franchised store payment system 720. At this time, the screen is divided in two. The payment standby screen 606 is displayed in one screen division and the advertisement screen 602 is displayed in the other screen division.

The above-described signature window 610 is available in both contact and non-contact type touch pads, and various types of displays such as an LED and an LCD can be used as a type of display.

An advertisement method using the above-described electronic signature device 500 in an advertiser server 710, a franchised store payment system, a VAN company server, and a credit card company server includes: an advertiser recruiting step 810 of recruiting, by the VAN company server 730, an advertiser; a log-in step 820 of prompting, by the VAN company server 730, the advertiser server 710 recruited in the advertiser recruiting step 10 to log in; a transmitting step 830 of transmitting, by the VAN company server 730, an advertisement file received from the advertiser server 710 to the franchised store payment system; a delivering step 840 of delivering, by the franchised store payment system 720, the advertisement file to a signature window 610 of the electronic signature device 500; an authorizing step 850 of transmitting authorization information from the franchised store payment system 720 to the credit card company server 740 when card payment is required in the franchised store payment system 720; an authorization transmitting step 860 of transmitting, by the credit card company server 740, the authorization information to the franchised store payment system 720; a signing step 870 of continuously delivering, by the franchised store payment system 720, the advertisement file to one half of the signature window 610 while performing a signature input step using the other half of the signature window 610 of the electronic signature device 500; a result transmitting step 880 of storing, by the franchised store payment system 720, signature information after the signing step 870, calculating a result of delivering the advertisement file as an exposure frequency, and transmitting a calculation result to the VAN company server 730; and a payment request step 890 of requesting, by the VAN company server 730, the advertiser server 710 to make payment by receiving the exposure frequency.

In the above-described advertiser recruiting step 810, the VAN company server 730 performs recruitment. The advertiser can directly create an advertisement file or the VAN company server 730 can transmit the advertisement file after receiving a service request.

The VAN company server 730 delivers the advertisement file to the franchised store payment system 720 and provides a benefit such as reducing an authorization fee or the like.

The above-described authorizing step 850 is the step of transmitting the authorization information when the consumer makes payment through the credit card in the franchised store payment system 720. The credit card company server 740 transmits the authorization information for the credit card in the authorization transmitting step 860.

The above-described signing step 870 is the step in which the consumer inputs the signature to the electronic signature device 500. At this time, the screen of the electronic signature device 500 is divided in two. An advertisement is continuously delivered to the advertisement screen 602 and payment is on standby in the payment standby screen 606.

When the consumer inputs the signature on the above-described payment standby screen 606, signature information is transmitted to and stored in the franchised store payment system 720. This authorization information is calculated as an exposure frequency and transferred to the VAN company server 730 in the result transmitting step 880.

The exposure frequency may be utilized as payment request information for the advertiser server 710 and the payment request step 890 can be performed using the payment request information.

As described above, the electronic signature device 500 of the present invention may be utilized as an advertisement means and may also provide a reliable advertisement effect to the advertiser because an accurate frequency of advertisement exposure can be calculated based on authorization information.

In addition, the signature window 610 of the electronic signature device 500 of the present invention is divided into the payment standby screen 606 and the advertisement screen 602 and a signature space can be formed to be significantly large.

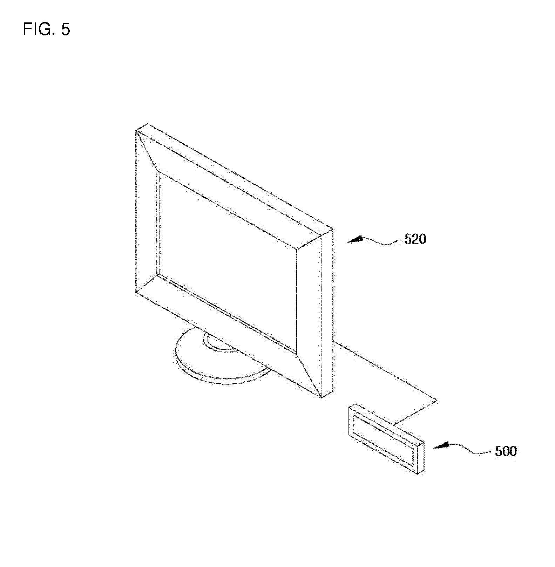

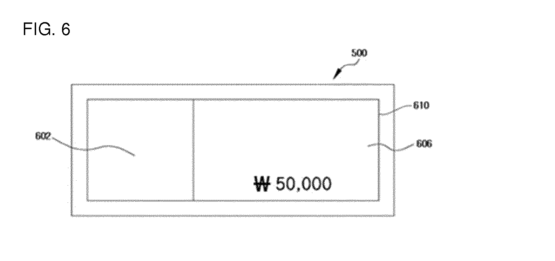

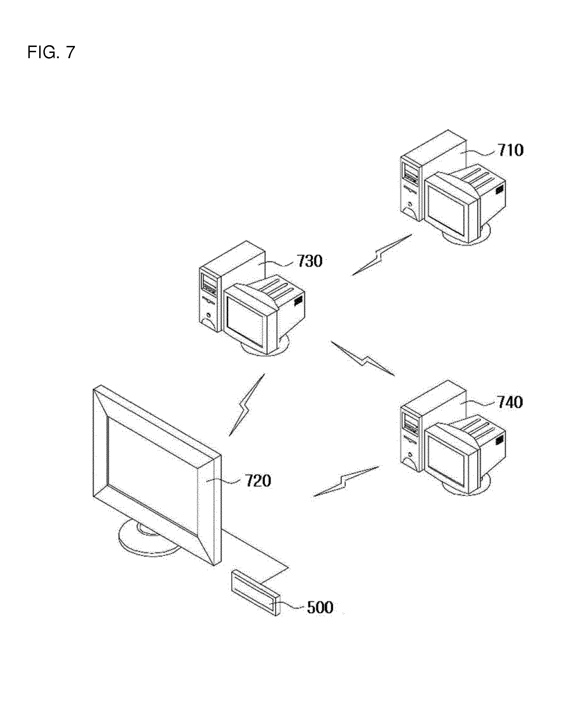

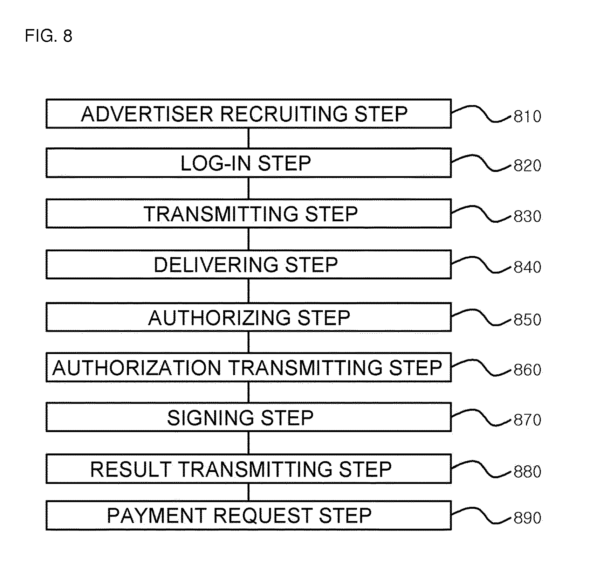

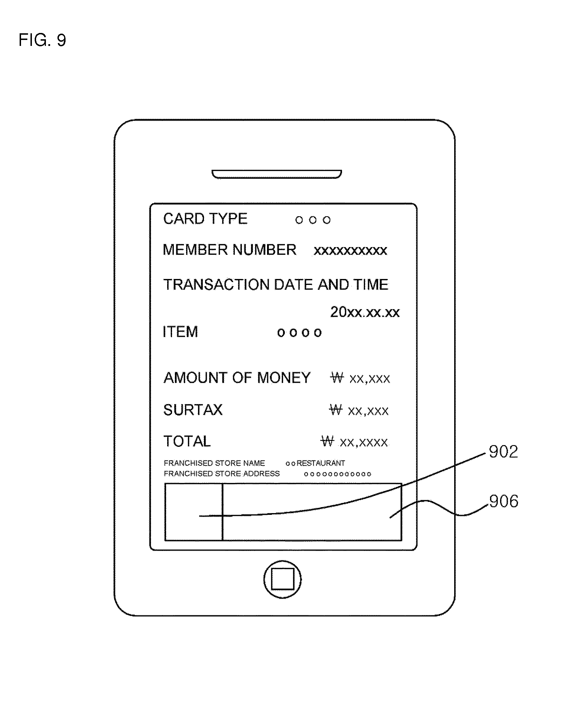

Referring to FIG. 9, the payment standby screen 606 and the advertisement screen 602 in the signature window 610 described with reference to FIGS. 5 to 8 may correspond to a payment standby screen 906 and an advertisement screen 902 in the signature window of FIG. 9. That is, the user may view an advertisement provided from the advertisement screen 902 while signing when the signature window 312 of the preliminary authorization window 310 is divided into the payment standby screen 906 and the advertisement screen 902.

The forms of the signature window 610, the payment standby screen 606, the advertisement screen 602, the preliminary authorization window 310, the payment standby screen 906, and the advertisement screen 902 illustrated in the drawings are only examples and the forms may be provided in various types.

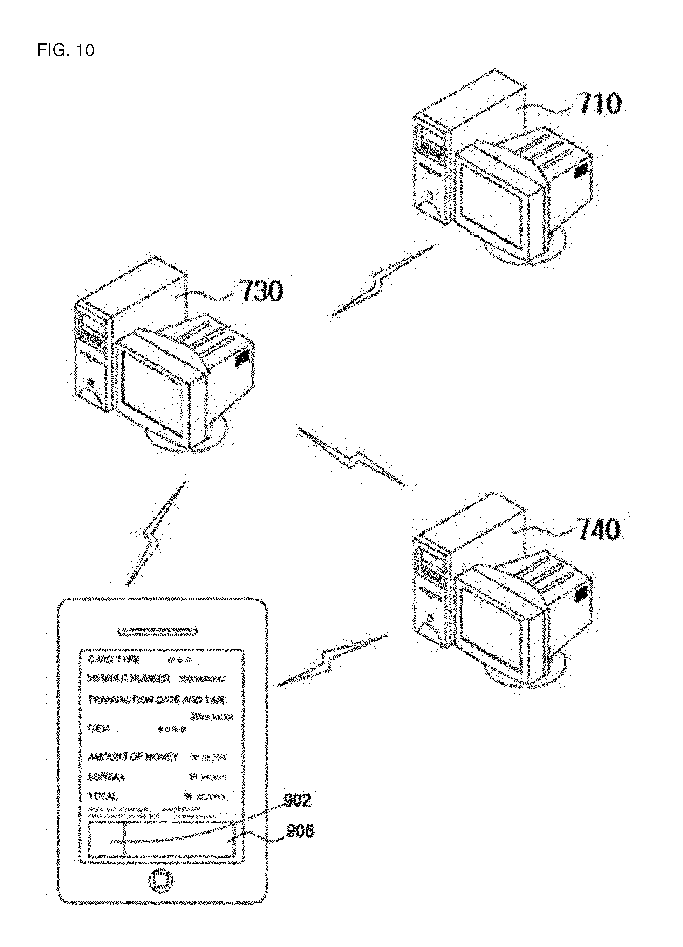

Referring to FIG. 10, a system in which the franchised store payment system 720 and the electronic signature device 500 described with reference to FIGS. 5 to 8 are replaced with a smartphone and a credit card terminal is illustrated.

Referring to FIG. 10, an advertisement method using a smartphone in an advertiser server, a credit card terminal, a smartphone, a VAN company server, and a credit card company server includes: an advertiser recruiting step of recruiting, by the VAN company server, an advertiser; a log-in step of prompting, by the VAN company server, the advertiser server recruited in the advertiser recruiting step to log in; a transmitting step of transmitting, by the VAN company server, an advertisement file received from the advertiser server to the smartphone; a delivering step of delivering the advertisement file to a signature window of the smartphone; an authorization step of transmitting authorization information from the credit card terminal to the credit card company server when card payment is required in the credit card terminal; an authorization transmitting step of transmitting, by the credit card company server, the authorization information to the credit card terminal; a signing step of continuously delivering, by the smartphone, the advertisement file to the signature window while performing a signature input step in the signature window; a result transmitting step of storing, by the credit card terminal, signature information after the signing step, calculating the number of times of storing the signature information as a frequency of advertisement exposure, and transmitting a result of delivering the advertisement file to the VAN company server; and a payment request step of requesting, by the VAN company server, the advertiser server to make payment by receiving the exposure frequency.

Although the present invention has been described based on the preferred embodiments with reference to the accompanying drawings, it is apparent that those skilled in the art can easily change or modify the present invention, and such modifications are also included in the scope of the invention.

## Claims

1. A credit card transaction method using a smartphone, the credit card transaction method comprising;
a step of storing signature information and smartphone information of a user in a credit card company server (200);
an authorization request step (10) of requesting, by a credit card terminal (100) including a slip storage function, authorization by transmitting sales details and credit card information to the credit card company server (200);
a preliminary authorization transmitting step (20) of transmitting, by the credit card company server (200), preliminary authorization information including payment details to the smartphone (300) of the credit card user after the authorization request step (10);
a signing step (30) of displaying, by a payment application program preset in the smartphone (300) of the user, a preliminary authorization window (310) including the preliminary authorization information transmitted in the preliminary authorization transmitting step (20) and prompting the user to input a signature in a signature window (312) formed in the preliminary authorization window (310);
a signature transmitting step (40) of transmitting, by the smartphone (300) of the user, the preliminary authorization window (310) in which the signature is input in the signing step to the credit card company server (200);
a signature comparing step (50) of determining, by the credit card company server (200), the authorization by comparing the input signature of the preliminary authorization window (310) transmitted in the signature transmitting step (40) to signature information of a registered user; and
a slip transmitting step (60) of transmitting an authorization acknowledgement to the credit card terminal (100) along with authorization information when the authorization is determined in the signature comparing step (50) and transmitting a payment authorization window (320) to the smartphone (300) of the user.

2. The credit card transaction method using the smartphone according to claim 1, wherein, in the signing step (30), an advertisement is displayed in the signature window (312).

3. The credit card transaction method using the smartphone according to claim 1, wherein the signature comparing step (50) includes:
converting a degree to which the signature of the user registered by the credit card company server (200) in advance matches the signature input in the signature window (312) of the preliminary authorization window (310) into a numerical value;
determining the authorization when the numerical value is greater than or equal to 80%; and
determining authorization rejection when the signatures do not match.
